# EUROPEAN PATENT SPECIFICATION

(11) **EP 3 804 580 B1**
(45) Date of publication and mention of the grant of the patent: **30.11.2022**
(21) Application number: 20200731.6
(22) Date of filing: 08.10.2020
(51) Int. Cl.: A47J 31/52

(54) **COFFEE MACHINE**
KAFFEEMASCHINE
MACHINE À CAFÉ

(30) Priority: 11.10.2019 IT 201900018581
(43) Date of publication of application: 14.04.2021
(73) Proprietor: SIMONELLI GROUP S.P.A., 62020 Belforte del Chienti (MC) (IT)
(72) Inventor: CINGOLANI, Claudio Enrico, 62032 Camerino (MC) (IT); PARRINI, Mauro, 63821 Porto Sant'Elpidio (FM) (IT)
(74) Representative: Biallo, Dario

(56) References cited:
- EP-A1- 2 764 806
- DE-A1-102010 043 856
- US-B1- 9 499 385

## Description

The present invention refers to a machine for dispensing coffee or coffee machine, for example an espresso coffee machine.

As it is known, coffee machines comprise a plurality of components and devices of the hydraulic, electric, electric-mechanical and electronic type which are subject to wear and failures, for example pumps, mixers, dispensers, valves, contactors and so on. Damaged or worn components and devices must necessarily be replaced to ensure correct operation of the coffee machine. To carry out these maintenance operations it is necessary to stop the operation of the machine which, therefore, remains unproductive for a certain period of time.

In order to minimize the negative impact of maintenance on the productivity of coffee machines, it is known to schedule preventive maintenance interventions at predetermined periods, for example every three or six months after the machines are put into operation, or after a certain number of dispensed coffees. In these scheduled preventive maintenance interventions, components subject to wear and potential damage are replaced regardless of their actual functional state. Preventive maintenance permits to limit the costs of loss of functionality as a result of failures, to better plan the use of the operators in charge, to organize the spare parts warehouse and to reduce machine downtime. However, preventive maintenance can lead to unnecessary intervention by sacrificing a portion of the component's useful life. Furthermore, for reasons of time and money, preventive maintenance cannot cover all the components of the coffee machine and in fact the components less at risk are excluded from periodic replacements.

A potential solution to these drawbacks is represented by the so-called predictive maintenance according to which maintenance interventions are scheduled on the basis of the analysis of the data on the functional status of the various components and devices.

In particular, predictive maintenance programmes make it possible to predict possible failures or disservices by relating data on the current functional status of the components of a machine with mathematical models that represent the useful life of the components themselves, where these mathematical models are the result of the analysis of historical data collected on a large number of sample machines.

Predictive maintenance therefore leads to an optimization of the maintenance service, a reduction in maintenance costs, an improvement in the reliability of the machines, a reduction in machine standstill as well as the automatic determination of the root cause of failure.

EP2764806A1 describes a method that involves executing sensoric monitoring of function and/or operating conditions of subsystems e.g. brewing unit (12), bean container (13), set container (16), boiler (20), pump (21) and driving motor (23), of a fully-automatic coffee machine (10) for controlling operation and/or diagnosis of the machine. The monitoring of the function and/or conditions is carried out through detection of noises and/or body oscillations delivered by the subsystems. The noises are detected by microphones (M1-M3) arranged at different locations and evaluated in a signal processing unit (19).

The object of the present invention is to obviate the above mentioned drawbacks and in particular to devise a coffee machine which allows the implementation of predictive maintenance.

This and other objects according to the present invention are achieved by making a coffee machine as set forth in claim 1.

Further characteristics of the coffee machine are the subject of the dependent claims.

The features and advantages of the present invention will be more apparent from the following illustrative and non-limiting description, with reference to the appended schematic drawings, wherein:

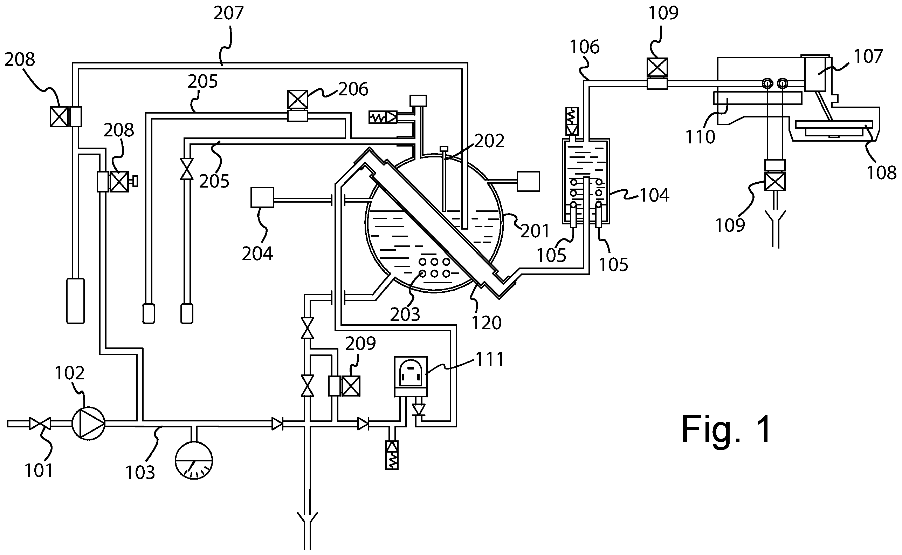

- Figure 1 is a hydraulic diagram of a coffee machine;
- Figures 2a, 2b and 2c are three block diagrams relating to three alternative embodiments of a coffee machine according to the present invention connected to a remote server by means of a telecommunications network 50.

With reference to the figures, a coffee machine is shown, indicated as a whole with 10.

This coffee machine 10 comprises a main body which comprises a circuit for dispensing coffee.

The circuit for dispensing coffee has an inlet that can be hydraulically connected to a water supply line, for example by means of a tap 101. The supply line can be hydraulically connected to a tray containing water or it can be an end part of the hydraulic distribution system of the room where the coffee machine 10 is located. The circuit for dispensing coffee also comprises a pump 102 downstream of the tap adapted to put under pressure water arriving from the supply line, for example at a pressure comprised between 1 and 15 bar, and send it through a delivery duct 103 up to a first boiler 104 also called the "coffee boiler";. The coffee boiler 105 is therefore directly or indirectly hydraulically associated to the pump 102.

The coffee boiler 104 is partially filled with water and is provided with at least a first electric heating element 105, for example a resistance, adapted to heat the water contained in the coffee boiler 104.

The coffee boiler 104 can also be provided with a thermostat or a temperature probe in order to control the temperature of the water so that the latter substantially reaches a first predetermined temperature, for example 90°C. The circuit for dispensing coffee further comprises at least one extraction tube 106 which draws into the coffee boiler 104 to extract the heated pressurized water and carry it to a respective dispensing group. Each dispensing group is therefore hydraulically associated to the coffee boiler 104. Each dispensing group comprises a diffuser 107 provided with a shower head 108 from which water outflows. The delivery of water through the dispensing group is controlled by means of a first solenoid valve 109. The shower head 108 is mechanically coupled to a filter holder with a filter where the coffee can be housed for extraction purposes.

Each dispensing group can also comprise at least a second electric heating element 110, for example a resistance, suitable to heat the diffuser 107 so as to maintain the temperature thereof substantially constant and equal to the aforesaid first predetermined temperature.

The main body of the coffee machine 10 can also comprise a circuit for dispensing steam and/or heated water.

Heated water means water at a temperature suitable for hot drinks, for example comprised between 70°C and 100°C, however higher than that of the water arriving from the water supply line.

Said circuit for dispensing steam and/or heated water comprises a second boiler 201, also called "steam boiler", directly or indirectly hydraulically associated to the pump 102. The steam boiler 201 is partially filled with water maintained at a higher temperature than that arriving from the supply line, for example comprised between 85°C and 120°C. The steam boiler 201 can be provided with a level probe 202 for detecting the water level and with at least a third electric heating element 203, for example a resistance, suitable to heat the water present in the boiler. The pressure and/or temperature of the steam boiler 201 can be adjusted by a pressure switch 204, or by a temperature probe or by a pressure probe. The pressure and/or temperature of the steam boiler 101 is adjusted so that at least a part of the volume of water contained in the steam boiler 201 evaporates.

The steam boiler 201 is hydraulically connected to one or more ducts for dispensing steam 205 which end with respective wands. The delivery of water steam through said wands is controlled by respective second solenoid valves 206.

The presence of one or more ducts for dispensing heated water 207 is also provided which draw in the lower part of the steam boiler 201 and end with respective wands. The ducts for dispensing heated water 207 are also hydraulically connected to the delivery duct 103 of the pump 102 so as to be able to mix the water arriving from the supply line with that arriving from the steam boiler 201. The aforesaid mixing and consequent delivery of the heated water is controlled by third solenoid valves 208.

Furthermore, the steam boiler 201 is hydraulically connected to the delivery duct 103 of the pump 102 so as to be able to fill the steam boiler 201 when the water level falls below a predetermined threshold. This connection is controlled by a fourth solenoid valve 209.

The power supply of each of the aforesaid electric heating elements 105, 110, 203 is controlled by a respective switch (not illustrated), for example a relay. In particular, said switches are connected to a power switch device 60, for example a contactor, configured to permit or to prevent the passage of electric power toward the switches and therefore toward the electric heating elements 105, 110, 203. Said power switch device 60 is controlled by a central processing and control unit 20 which commands the closing or opening thereof. In one embodiment, the circuit for dispensing coffee also comprises a heat exchanger 120 passing through the steam boiler 201 and hydraulically connected on one side to the delivery duct 103 of the pump 102 and on the other side to the coffee boiler 104. In this case, the water arriving from the supply line undergoes a preheating when it passes through the heat exchanger 120 as a result of the heat exchange with the hottest water present in the steam boiler 201. In this way, the thermal difference between the water that enters the coffee boiler 104 and that already contained in this boiler is reduced, allowing energy savings for maintaining the temperature in the coffee boiler 104.

A volumetric dosing device 111 can be provided between the heat exchanger 120 and the delivery duct 103.

The circuit for dispensing coffee and the circuit for dispensing steam and/or heated water will not be further described as they are known per se.

The coffee machine 10 comprises the central processing and control unit 20 configured to control the circuit for dispensing coffee and the circuit for dispensing steam and/or heated water and a display 21 associated with said central processing and control unit 20.

The display 21 is provided with a dedicated processing and control unit 23 connected to the central processing and control unit 20, it can be of the touch-screen type and/or be associated to a push-button panel.

The display 21 is adapted to display information on the status of the coffee machine as well as to allow an operator to set predetermined operating programmes of the coffee machine.

The coffee machine also comprises a communication interface or gateway 22, for example a router, which can be connected to the central processing and control unit 20, and/or to the dedicated processing and control unit 23.

The communication interface 22 is configured to connect with a telecommunications network 50, for example the internet, and with one or more remote servers 30 by said telecommunications network 50. The communication interface 22 can be provided with one or more communication ports for the wired connection to the telecommunications network 50 or with an antenna for the wireless connection to the telecommunications network 50.

According to the present invention, the coffee machine 10 comprises:
- a sensor system for the detection of parameters related to possible operation anomalies or failures of the coffee machine 10 provided inside the main body;
- a peripheral processing unit 40 at least connected to the sensor system and configured to carry out a first local processing of the data detected by the sensors and to send the locally processed data to remote servers 30 by the communication interface 22. Preferably, the peripheral processing unit 40 is directly connected to the communication interface 22 so as to be able to directly send the locally processed data to said communication interface 22 which is then assigned to the transmission to the remote servers 30.

Alternatively, the peripheral processing unit 40 is directly connected to the central processing and control unit 20; in this case, the peripheral processing unit 40 sends the locally processed data to the central processing and control unit 20 which then sends them to the communication interface 22 by direct connection or by the dedicated processing and control unit 23.

According to a further alternative, the peripheral processing unit 40 is directly connected to the dedicated processing and control unit 23 of the display 21; in this case, the peripheral processing unit 40 sends the locally processed data to the dedicated processing and control unit 23 of the display 21 which then sends them to the communication interface 22 by direct connection or by the processing and control unit central 20.

The sensor system comprises one or more microphones 12 and/or one or more vibration sensors 13. Advantageously, the microphones 12 are omnidirectional and are arranged inside the main body.

Preferably, at least one of said microphones 12 is sensitive to frequencies of the audible sound for example comprised between 20 Hz and 20 KHz.

Preferably, at least one of said microphones 12 is sensitive to ultrasound frequencies, for example greater than 20 KHz.

For example, the microphones 12 are capable of detecting an anomaly or failure of one of the boilers 104, 201 or of one of the switches or of the power switch device 60. In fact, each of these components emits a sound in a predetermined frequency interval as a result of an anomaly or a failure.

In particular, microphones sensitive to ultrasound frequencies allow the identification of failures and/or anomalies that do not produce an audible noise, in particular minor failures and/or anomalies that, if neglected, can get worse and then emit an audible noise. For example, the noise caused by a steam leak in a boiler becomes audible only if the hole causing the leak has a certain size; instead, the very little holes generate ultrasounds. The ability to detect ultrasound allows prompt intervention to repair the failure before it leads to a potentially damaging situation for other components that requires various downtime for maintenance. The presence of microphones sensitive to ultrasounds, therefore, is very important for the implementation of predictive maintenance as it allows to identify failures and/or anomalies when they are still minor. Advantageously, the vibration sensors 13 are provided on at least one component belonging to the group of components which comprises the switches for controlling the electrical power supply of the heating elements 105, 110, 203, the solenoid valves 109, 206, 208, 209 and the pump 102.

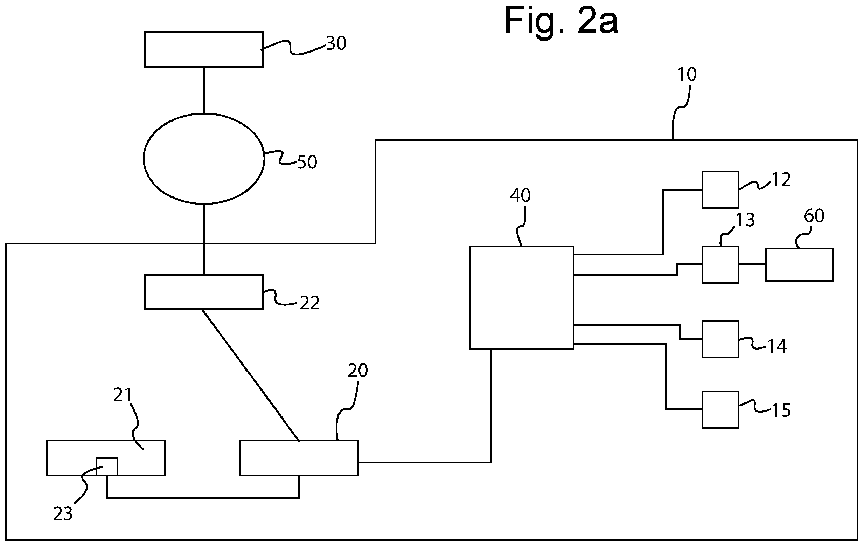

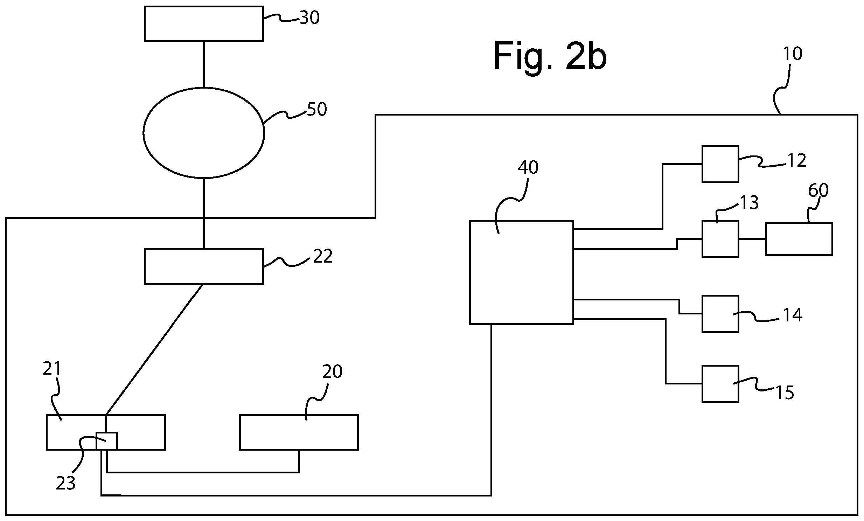

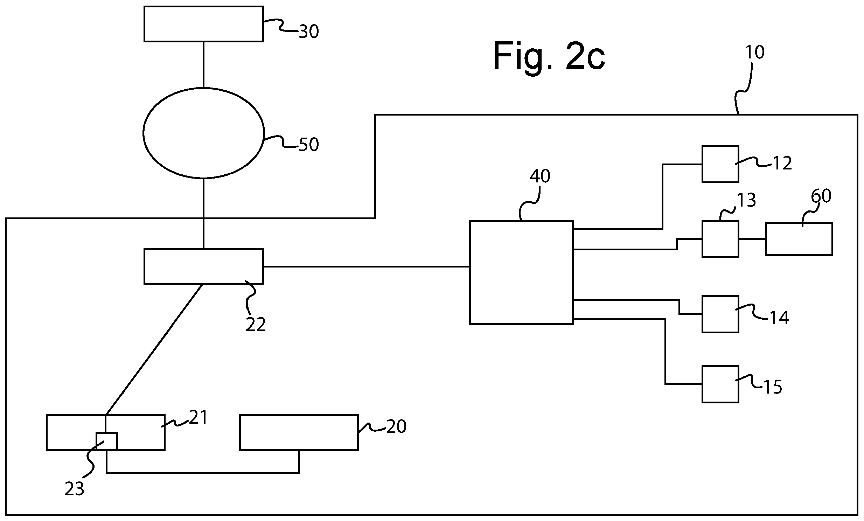

For simplicity's sake of illustration, the vibration sensors 13 are shown in Figures 2a-2c applied to the power switch device 60, being able in other embodiments to be applied to one or more of the aforesaid components. In this way, the vibration sensors 13 are able to detect an anomaly or a failure of the component on which they are positioned. Each of said components, in fact, as a result an anomaly or a failure, vibrates in a predetermined frequency interval.

Preferably at least one of said vibration sensors 13 is an accelerometer.

Preferably at least one of said vibration sensors 13 is a gyroscope.

Preferably, the sensor system comprises one or more temperature sensors 14 and/or one or more humidity sensors 15.

Advantageously, the temperature sensors 14 and the humidity sensors 15 are arranged inside the main body.

The temperature sensors 14 and the humidity sensors 15 are able to detect changes in temperature and humidity which may be linked to the anomaly or failure of one of the boilers 104, 201 or of another component.

The first local processing carried out by the peripheral processing unit 40 is aimed at reducing the amount of data to be sent to the remote servers. There are, in fact, some quantities that vary very quickly over time and that determine an enormous amount of detected data whose complete transmission to remote servers would be slow and would require very expensive hardware resources. For example, the first processing may consist in calculating at least one of the following values in successive predetermined time intervals: maximum value, minimum value, average value, variance of the detected data. The first processing can be even more complex, involving the implementation of self-learning models.

The remote servers 30 are programmed to process the locally processed data received from the communication interface 22 of the coffee machine according to preset predictive models in order to provide information on the probability of failure or anomaly of the components monitored by the sensor system. Such remote servers 30 are also programmed to update the preset predictive models on the basis of the data received from one or more coffee machines 10.

Predictive models are implemented using algorithms already known to the state of the art.

From the above description the characteristics of the coffee machine object of the present invention are clear, as are the relative advantages.

The coffee machine according to the present invention, in fact, allows to collect a plurality of detected data relating to the operation of the mechanical, hydraulic, electromechanical, electric and electronic components which are part of the circuits for dispensing coffee, steam and heated water. These detected data can then be related to failure or anomaly events by numerical processing based on predictive models that allow to implement predictive maintenance protocols. In particular, numerical processing based on predictive models provides data relating to the probability of failure of a given component within a predetermined time interval, for example the probability of a failure of the contactor to occur within 200 hours.

The sensor system used in the coffee machine carry out environmental measurements (microphones, temperature sensors, humidity sensors) and measurements on the single components subject to wear (vibration sensors); this allows monitoring data to be collected as complete and as exhaustive as possible.

Then, the presence of the peripheral processing unit allows to carry out a first local processing of the detected data which allows to make the subsequent processing according to the aforesaid predictive models quicker and easier.

In practice, the materials used, as well as the dimensions thereof, can be of any type according to the technical requirements.

## Claims

1. Coffee machine (10) comprising a main body comprising:
- a circuit for dispensing coffee having an inlet for that can be hydraulically connected to a water supply line and comprising:
- a pump (102) suitable to put under pressure water arriving from the supply line;
- a first boiler (104) directly or indirectly hydraulically associated to said pump (104) and comprising at least a first electric heating element (105);
- at least one dispensing group (107, 108) hydraulically associated to said first boiler (104), controlled by a respective first solenoid valve (109);
- a power switch device (60) configured to permit or to prevent the passage of electric power toward said first electric heating element (105);
- a central processing and control unit (20) configured to control at least said circuit for dispensing coffee;
- a communication interface (22) connected to said central processing and control unit (20) and configured to connect with a telecommunications network (50);
- a sensor system for the detection of parameters related to possible operation anomalies or failures of said coffee machine (10) provided inside said main body, said sensor system comprising one or more omnidirectional microphones (12) arranged inside the main body;
- a peripheral processing unit (40) at least connected to the sensor system and configured to carry out a first local processing of the data detected by the sensors (12, 13) and to send the locally processed data to one or more remote server (30) by the communication interface (22)
**characterized in that** at least one of said microphones (12) is sensitive to ultrasonic frequencies.

2. Coffee machine (10) according to claim 1, wherein at least one dispensing group (107, 108) comprises at least a second electric heating element (110), said power switch device (60) being configured to allow or prevent the passage of electric power also towards said at least one second electric heating element (203).

3. Coffee machine (10) according to claim 1 or 2, wherein said main body comprises a circuit for dispensing steam and/or heated water comprising:
- a second boiler (201) hydraulically connected to said pump (102) wherein said connection is controlled by a fourth solenoid valve (209), said second boiler (201) comprising at least one third electric heating element (203) ;
- one or more steam delivery ducts (205) hydraulically connected to said second boiler (201) wherein the steam delivery is controlled by respective second solenoid valves (206);
- one or more ducts for delivering heated water (207) hydraulically connected to said second boiler (203) and to said pump (102) so as to be able to mix the water arriving from said second boiler (203) with the water arriving from the supply line, the delivery of heated water being controlled by respective third solenoid valves (206),
said power switch device (60) being configured to allow or prevent the passage of electric power also towards said at least one third electric heating element (203).

4. Coffee machine (10) according to claim 3, wherein at least one of said microphones (12) is sensitive to audible sound frequencies.

5. Coffee machine (10) according to one of the preceding claims, wherein said sensor system comprises one or more vibration sensors (13) positioned on at least one component belonging to the group of components which comprises said power switch device (60), said solenoid valves (109, 206, 208, 209) and said pump (102).

6. Coffee machine (10) according to claim 5, wherein at least one of said vibration sensors (13) is an accelerometer.

7. Coffee machine (10) according to claim 5 or 6, wherein at least one of said vibration sensors (13) is a gyroscope.

8. Coffee machine (10) according to one of the preceding claims, wherein said sensor system comprises one or more temperature sensors (14) and/or one or more humidity sensors (15) arranged inside said main body.

9. Coffee machine (10) according to one of the preceding claims, comprising a display (21) provided with a dedicated processing and control unit (23) connected to said central processing and control unit (20), said communication interface (22) being connected to said central processing and control unit (20) and/or to said dedicated processing and control unit (23).

10. Coffee machine (10) according to one of the preceding claims, wherein said peripheral processing unit (40) is directly connected to said communication interface (22).

11. Coffee machine (10) according to one of the preceding claims, wherein said peripheral processing unit (40) is directly connected to said central processing and control unit (20).

12. Coffee machine (10) according to one of the preceding claims, wherein said peripheral processing unit (40) is directly connected to said dedicated processing and control unit (23).

## Patentansprüche

1. Kaffeemaschine (10) mit einem Hauptkörper, umfassend:
- einen Kreislauf für die Ausgabe von Kaffee mit einem Einlass dafür, der hydraulisch mit einer Wasserversorgungsleitung verbunden werden kann, und umfassend:
- eine Pumpe (102), die geeignet ist, das aus der Versorgungsleitung kommende Wasser unter Druck zu setzen;
- einen ersten Kessel (104), der direkt oder indirekt hydraulisch mit der Pumpe (104) verbunden ist und mindestens ein erstes elektrisches Heizelement (105) umfasst;
- mindestens eine Ausgabegruppe (107, 108), die hydraulisch mit dem ersten Kessel (104) verbunden ist und durch ein jeweiliges erstes Magnetventil (109) gesteuert wird;
- eine Leistungsschaltvorrichtung (60), die so konfiguriert ist, dass sie den Durchgang von elektrischer Leistung zum ersten elektrischen Heizelement (105) ermöglicht oder verhindert;
- eine zentrale Verarbeitungs- und Steuereinheit (20), die so konfiguriert ist, dass sie zumindest den Kreislauf zur Ausgabe von Kaffee steuert;
- eine Kommunikationsschnittstelle (22), die mit der zentralen Verarbeitungs- und Steuereinheit (20) verbunden und so konfiguriert ist, dass sie mit einem Telekommunikationsnetz (50) verbunden werden kann;
- ein Sensorsystem zur Erfassung von Parametern, die sich auf mögliche Betriebsanomalien oder -ausfälle der Kaffeemaschine (10) beziehen, das im Inneren des Hauptkörpers vorgesehen ist, wobei das Sensorsystem ein oder mehrere omnidirektionale Mikrofone (12) umfasst, die im Inneren des Hauptkörpers angeordnet sind;
- eine periphere Verarbeitungseinheit (40), die zumindest mit dem Sensorsystem verbunden und so konfiguriert ist, dass sie eine erste lokale Verarbeitung der von den Sensoren (12, 13) erfassten Daten durchführt und die lokal verarbeiteten Daten über die Kommunikationsschnittstelle (22) an einen oder mehrere Remote-Server (30) sendet, **dadurch gekennzeichnet, dass** zumindest eines der Mikrofone (12) für Ultraschallfrequenzen empfindlich ist.

2. Kaffeemaschine (10) nach Anspruch 1, wobei mindestens eine Ausgabegruppe (107, 108) mindestens ein zweites elektrisches Heizelement (110) umfasst, wobei die Leistungsschaltvorrichtung (60) so konfiguriert ist, dass sie den Durchgang von elektrischer Leistung auch zum mindestens einen zweiten elektrischen Heizelement (203) ermöglicht oder verhindert.

3. Kaffeemaschine (10) nach Anspruch 1 oder 2, wobei der Hauptkörper einen Kreislauf zur Ausgabe von Dampf und/oder erhitztem Wasser aufweist, umfassend:
- einen zweiten Kessel (201), der hydraulisch mit der Pumpe (102) verbunden ist, wobei die Verbindung durch ein viertes Magnetventil (209) gesteuert wird, wobei der zweite Kessel (201) mindestens ein drittes elektrisches Heizelement (203) umfasst;
- eine oder mehrere Dampfzufuhrleitungen (205), die hydraulisch mit dem zweiten Kessel (201) verbunden sind, wobei die Dampfzufuhr durch jeweilige zweite Magnetventile (206) gesteuert wird;
- eine oder mehrere Leitungen zum Zuführen von erhitztem Wasser (207), die hydraulisch mit dem zweiten Kessel (203) und mit der Pumpe (102) verbunden sind, um das vom zweiten Kessel (203) kommende Wasser mit dem von der Versorgungsleitung kommenden Wasser mischen zu können, wobei die Zufuhr von erhitztem Wasser durch jeweilige dritte Magnetventile (206) gesteuert wird,
wobei die Leistungsschaltvorrichtung (60) so konfiguriert ist, dass sie den Durchgang von elektrischer Leistung auch zum mindestens einen dritten elektrischen Heizelement (203) ermöglicht oder verhindert.

4. Kaffeemaschine (10) nach Anspruch 3, wobei mindestens eines der Mikrofone (12) für hörbare Schallfrequenzen empfindlich ist.

5. Kaffeemaschine (10) nach einem der vorhergehenden Ansprüche, wobei das Sensorsystem einen oder mehrere Schwingungssensoren (13) umfasst, die an mindestens einer Komponente positioniert sind, die zur Gruppe von Komponenten gehört, die die Leistungsschaltvorrichtung (60), die Magnetventile (109, 206, 208, 209) und die Pumpe (102) umfasst.

6. Kaffeemaschine (10) nach Anspruch 5, wobei mindestens einer der Schwingungssensoren (13) ein Beschleunigungsmesser ist.

7. Kaffeemaschine (10) nach Anspruch 5 oder 6, wobei mindestens einer der Schwingungssensoren (13) ein Gyroskop ist.

8. Kaffeemaschine (10) nach einem der vorhergehenden Ansprüche, wobei das Sensorsystem einen oder mehrere Temperatursensoren (14) und/oder einen oder mehrere Feuchtigkeitssensoren (15) umfasst, die im Inneren des Hauptkörpers angeordnet sind.

9. Kaffeemaschine (10) nach einem der vorhergehenden Ansprüche, umfassend eine Anzeige (21), die mit einer dedizierten Verarbeitungs- und Steuereinheit (23) versehen ist, die mit der zentralen Verarbeitungs- und Steuereinheit (20) verbunden ist, wobei die Kommunikationsschnittstelle (22) mit der zentralen Verarbeitungs- und Steuereinheit (20) und/oder mit der dedizierten Verarbeitungs- und Steuereinheit (23) verbunden ist.

10. Kaffeemaschine (10) nach einem der vorhergehenden Ansprüche, wobei die periphere Verarbeitungseinheit (40) direkt mit der Kommunikationsschnittstelle (22) verbunden ist.

11. Kaffeemaschine (10) nach einem der vorhergehenden Ansprüche, wobei die periphere Verarbeitungseinheit (40) direkt mit der zentralen Verarbeitungs- und Steuereinheit (20) verbunden ist.

12. Kaffeemaschine (10) nach einem der vorhergehenden Ansprüche, wobei die periphere Verarbeitungseinheit (40) direkt mit der dedizierten Verarbeitungs- und Steuereinheit (23) verbunden ist.

## Revendications

1. Machine à café (10) constituée d'un corps principal comprenant:
- un circuit de distribution de café comportant une entrée prévue à cet effet, qui peut être reliée hydrauliquement à une ligne d'alimentation en eau et comprenant:
- une pompe (102) destinée à mettre sous pression l'eau arrivant de la ligne d'alimentation;
- une première chaudière (104) directement ou indirectement associée hydrauliquement à ladite pompe (104) et comprenant au moins un premier élément chauffant électrique (105);
- au moins un groupe de distribution (107, 108) associé hydrauliquement à ladite première chaudière (104), commandé par une première électrovanne (109);
- un dispositif de commutation de puissance (60) configuré pour permettre ou empêcher le passage de l'énergie électrique vers ledit premier élément de chauffant électrique (105);
- une unité centrale de traitement et de commande (20) configurée pour commander au moins ledit circuit de distribution de café;
- une interface de communication (22) connectée à ladite unité centrale de traitement et de commande (20) et configurée pour se connecter à un réseau de télécommunications (50);
- un système de capteurs pour la détection de paramètres liés à d'éventuelles anomalies ou défaillances de fonctionnement de ladite machine à café (10) prévu à l'intérieur dudit corps principal, ledit système de capteurs comprenant un ou plusieurs microphones omnidirectionnels (12) disposés à l'intérieur du corps principal;
- une unité de traitement périphérique (40) au moins connectée au système de capteurs et configurée pour effectuer un premier traitement local des données détectées par les capteurs (12, 13) et pour envoyer les données traitées localement à un ou plusieurs serveurs distants (30) par l'interface de communication (22), **caractérisée en ce qu'**au moins un desdits microphones (12) est sensible aux fréquences ultrasonores.

2. Machine à café (10) selon la revendication 1, dans laquelle au moins un groupe de distribution (107, 108) comprend au moins un deuxième élément chauffant électrique (110), ledit dispositif de commutation de puissance (60) étant configuré pour permettre ou empêcher le passage de l'énergie électrique également vers ledit deuxième élément chauffant électrique (203).

3. Machine à café (10) selon la revendication 1 ou 2, dans laquelle ledit corps principal comprend un circuit de distribution de vapeur ou d'eau chauffée comprenant :
- une deuxième chaudière (201) reliée hydrauliquement à ladite pompe (102), ladite liaison étant commandée par une quatrième électrovanne (209), ladite deuxième chaudière (201) comprenant au moins un troisième élément chauffant électrique (203);
- un ou plusieurs conduits de distribution de vapeur (205) reliés hydrauliquement à ladite deuxième chaudière (201), dans lesquels la distribution de vapeur est commandée par les deuxièmes électrovannes respectives (206);
- un ou plusieurs conduits de distribution d'eau chauffée (207) reliés hydrauliquement à ladite deuxième chaudière (203) et à ladite pompe (102) de façon à pouvoir mélanger l'eau arrivant de ladite deuxième chaudière (203) avec l'eau arrivant de la ligne d'alimentation, la distribution d'eau chauffée étant commandée par les troisièmes électrovannes respectives (206),
ledit dispositif de commutation de puissance (60) étant configuré pour permettre ou empêcher le passage de l'énergie électrique également vers ledit troisième élément chauffant électrique (203).

4. Machine à café (10) selon la revendication 3, dans laquelle au moins un desdits microphones (12) est sensible aux fréquences sonores audibles.

5. Machine à café (10) selon l'une des revendications précédentes, dans laquelle ledit système de capteurs comprend un ou plusieurs capteurs de vibrations (13) positionnés sur au moins un composant appartenant au groupe de composants qui comprend ledit dispositif de commutation de puissance (60), lesdites électrovannes (109, 206, 208, 209) et ladite pompe (102).

6. Machine à café (10) selon la revendication 5, dans laquelle au moins un desdits capteurs de vibrations (13) est un accéléromètre.

7. Machine à café (10) selon la revendication 5 ou 6, dans laquelle au moins un desdits capteurs de vibrations (13) est un gyroscope.

8. Machine à café (10) selon l'une des revendications précédentes, dans laquelle ledit système de capteurs comprend un ou plusieurs capteurs de température (14) ou un ou plusieurs capteurs d'humidité (15) disposés à l'intérieur dudit corps principal.

9. Machine à café (10) selon l'une des revendications précédentes, comprenant un écran (21) muni d'une unité de traitement et de commande dédiée (23) connectée à ladite unité centrale de traitement et de commande (20), ladite interface de communication (22) étant connectée à ladite unité centrale de traitement et de commande (20) ou à ladite unité de traitement et de commande dédiée (23).

10. Machine à café (10) selon l'une des revendications précédentes, dans laquelle ladite unité de traitement périphérique (40) est directement connectée à ladite interface de communication (22).

11. Machine à café (10) selon l'une des revendications précédentes, dans laquelle ladite unité de traitement périphérique (40) est directement connectée à ladite unité centrale de traitement et de commande (20).

12. Machine à café (10) selon l'une des revendications précédentes, dans laquelle ladite unité de traitement périphérique (40) est directement connectée à ladite unité de traitement et de commande dédiée (23).
